(19) Europäisches Patentamt
European Patent Office
Office européen des brevets

(11) **EP 4 462 812 A2**

(12) **EUROPEAN PATENT APPLICATION**

(43) Date of publication:
**13.11.2024 Bulletin 2024/46**

(21) Application number: **24195666.3**

(22) Date of filing: **10.07.2023**

(51) International Patent Classification (IPC):
**H04R 1/28** *(2006.01)*

(52) Cooperative Patent Classification (CPC):
**C01B 39/026; G10K 9/22; H04R 1/2869;**
H04R 2201/029; H04R 2499/11

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **18.07.2022 CN 202210840193**

(62) Document number(s) of the earlier application(s) in accordance with Art. 76 EPC:
**23184454.9 / 4 310 829**

(71) Applicant: **SSI New Material (Zhenjiang) Co., Ltd.**
**Zhenjiang, Jiangsu 212001 (CN)**

(72) Inventors:
• **WANG, Yijun**
  **ZHENJIANG, JIANGSU, 212001 (CN)**
• **GONG, Chang**
  **ZHENJIANG, JIANGSU, 212001 (CN)**

• **ZHANG, Lei**
  **ZHENJIANG, JIANGSU, 212001 (CN)**
• **GUO, Mingbo**
  **ZHENJIANG, JIANGSU, 212001 (CN)**
• **MA, Yuanhong**
  **ZHENJIANG, JIANGSU, 212001 (CN)**

(74) Representative: **Atout PI Laplace**
**Immeuble Up On**
**25 Boulevard Romain Rolland**
**CS 40072**
**75685 Paris Cedex 14 (FR)**

Remarks:
This application was filed on 21.08.2024 as a divisional application to the application mentioned under INID code 62.

(54) **IRON-MODIFIED MOLECULAR SIEVE, PRODUCTION METHOD THEREOF, IRON-MODIFIED ACOUSTIC MATERIAL, SPEAKER AND ELECTRONIC DEVICE**

(57) The present disclosure provides an iron-modified molecular sieve, a production method thereof, an iron-modified acoustic material, a speaker and an electronic device. The iron-modified molecular sieve comprises silica, alumina and iron elements in the framework thereof, and the content of iron is 0.005-2%, based on 100% of the total weight of the iron-modified molecular sieve. The iron-modified acoustic material comprises the iron-modified molecular sieve, wherein the content of the iron-modified molecular sieve is not less than 70%, based on 100% of the total weight of the iron-modified acoustic material. In the present disclosure, a molecular sieve is modified with an iron source to produce the iron-modified molecular sieve, and the iron-modified acoustic material is produced from the iron-modified molecular sieve as a raw material and provided in a rear cavity of a speaker, which can substantially improve its stability and reliability in terms of acoustic performance.

EP 4 462 812 A2

**Description**

This application is a divisional application of a European application No. 23184454.9, filed July 10, 2023, which claims priority to Chinese Patent Application No. 202210840193.6, filed July 18, 2022, both of which are hereby incorporated by reference in their entireties.

Field of Technology

The present disclosure relates to an iron-modified molecular sieve, a production method thereof, an iron-modified acoustic material, a speaker and an electronic device, and belongs to the field of materials, especially the technical field of electronic acoustic materials.

Background of Art

With the prosperity of social economy and the improvement of consumption level, people's demand for quality of life is increasing, and the cell phone, as the most important consumer electronics, plays a very important role in life. For the speaker as an important part of the cell phone, its quality is also increasingly important.

In particular, for the speaker of the cell phone, it is required to provide excellent acoustic performance while keeping the size as small as possible. The sound quality of the speaker is closely related to its design and manufacturing process, especially the design of the size of the rear cavity of the speaker. Usually, the smaller the rear cavity of the speaker, the worse the acoustic response of low frequency band, the worse the acoustic performance such as sound quality. Therefore, it is necessary to try to expand the rear cavity of the speaker to enhance its acoustic response in low frequency band. At present, the traditional acoustic materials for speakers are obtained by using silicon-aluminum molecular sieves or titanium-silica molecular sieves with MFI structure as main components, and shaping with binders and additives. Since the speakers are mainly targeted for the consumer market, the stability and reliability are among the key considerations in addition to acoustic performance. Therefore, the ratio of silicon to aluminum in the molecular sieves had to be increased, and even all-silicon molecular sieves were manufactured, to optimize the acoustic performance. However, due to the poor structural stability of high-silicon molecular sieves, the acoustic performance, stability and reliability of acoustic materials prepared from the currently used molecular sieve materials still cannot meet the requirements of people.

Therefore, it has been an urgent technical problem in the field to provide a new iron-modified molecular sieve, a production method thereof, an iron-modified acoustic material, a speaker and an electronic device.

Summary of the invention

In order to solve the above-mentioned disadvantages and defects, it is an object of the present disclosure to provide an iron-modified molecular sieve and a method for producing the iron-modified molecular sieve.

It is another object of the present disclosure to provide an iron-modified acoustic material.

It is a further object of the present disclosure to provide a speaker provided with the iron-modified acoustic material assembled in a rear cavity thereof.

It is a still further object of the present disclosure is to provide an electronic device provided with the iron-modified acoustic material in a rear cavity of a speaker thereof.

In order to achieve the above objects, in one aspect, the present disclosure provides an iron-modified molecular sieve, comprising silica, alumina and iron elements in the framework thereof, and the content of iron is 0.005-2%, based on 100% of the total weight of the iron-modified molecular sieve.

In a specific embodiment of the iron-modified molecular sieve of the present disclosure, the iron-modified molecular sieve is prepared by modifying a molecular sieve with an iron source.

In another aspect, the present disclosure further provides a method for producing the iron-modified molecular sieve, comprising:

step 1) mixing a molecular sieve with water, warming up the resultant mixture solution to 70-90°C and mixing the mixture solution homogeneously;
step 2) adding an iron source to the mixture solution obtained in step 1) and reacting at a temperature of 70-90°C for 4-6 h;
step 3) upon completion of the reaction, subjecting the solution obtained in step 2) to a solid-liquid separation, continuously washing the separated solid until the conductivity of washing water is < 300 μS/cm, drying the resultant solid at a temperature of 100-200°C, and then roasting at a temperature of 350-650°C for 2-6 h, to obtain the iron-modified molecular sieve.

In a specific embodiment of the method for producing the iron-modified molecular sieve of the present disclosure, wherein in the molecular sieve, the molar ratio of silica to alumina is 50-5000.

In a specific embodiment of the method for producing the iron-modified molecular sieve of the present disclosure, wherein the iron source comprises one or more of ferric chloride, ferric sulfate, ferrous sulfate, ferric acetate and the like, and is used in an amount of 0.05-0.25 by weight of the molecular sieve.

In a specific embodiment of the method for producing the iron-modified molecular sieve of the present disclosure, wherein in step 1), the molecular sieve is mixed with water, which is 10 times the weight of the molecular sieve. Moreover, the homogeneous mixing can be achieved by stirring.

In a further aspect, the present disclosure further provides an iron-modified acoustic material, comprising the iron-modified molecular sieve, wherein the content of the iron-modified molecular sieve is not less than 70%, based on 100% of the total weight of the iron-modified acoustic material.

In a specific embodiment of the iron-modified acoustic material of the present disclosure, the iron-modified acoustic material comprises the iron-modified molecular sieve, a binder, a dispersant and an auxiliary agent; wherein the content of the iron-modified molecular sieve is not less than 70%, the content of iron is 0.004-1.7%, the dry basis content of the dispersant is 0-1%, and the dry basis content of the auxiliary agent is 0-15%, based on 100% of the total weight of the iron-modified acoustic material.

In a specific embodiment of the iron-modified acoustic material of the present disclosure, the content of iron in the iron-modified acoustic material is 0.005-0.05%, based on 100% of the total weight of the iron-modified acoustic material.

In a specific embodiment of the iron-modified acoustic material of the present disclosure, the content of the binder is 1-15% measured as the content of the solid component in the binder, i.e., the dry basis content of the binder, based on 100% of the total weight of the iron-modified acoustic reinforcing material.

In a specific embodiment of the iron-modified acoustic material of the present disclosure, the binder comprises an inorganic binder and/or an organic binder;
wherein the inorganic binder comprises one or more of silica sol, alumina sol, water glass, pseudo-boehmite, and the like; and the organic binder comprises one or more of acrylate-based, epoxy-based, polyurethane-based organic binders and the like.

In some examples of the present disclosure, the dry basis content of the dispersant may be, for example, 0.84%, 0.96%, 0.90%, 0.44%, or the like, based on 100% of the total weight of the iron-modified acoustic material.

In a specific embodiment of the iron-modified acoustic material of the present disclosure, the dispersant comprises one or more of glycerin, HPMA, liquid paraffin, and the like.

In some examples of the present disclosure, the dry basis content of the auxiliary agent may be, for example, 14.43%, 1.62%, 3.81%, 3.70%, or the like, based on 100% of the total weight of the iron-modified acoustic material.

In a specific embodiment of the iron-modified acoustic material of the present disclosure, the auxiliary agent comprises one or more of kaolin, diatomite, silica fume, bentonite, smectite, and the like.

In a specific embodiment of the iron-modified acoustic material of the present disclosure, the iron-modified acoustic material is in the shape of microspheres (particles) having a size of 50-400 $\mu$m, blocks or flakes.

In the present disclosure, the type and specific substance of the molecular sieve used are not specifically limited. The molecular sieve may be a hydrogen type molecular sieve or a sodium type molecular sieve, and the specific substance of the molecular sieve can be selected according to the actual operational needs. In the process of modifying a molecular sieve with an iron source, at least a part of iron ions and hydrogen or sodium ions on the framework of the molecular sieve undergo exchange reaction, and iron ions are exchanged onto the framework, to obtain an iron-modified molecular sieve.

In some examples of the present disclosure, the method for producing the iron-modified acoustic material, comprising:

homogeneously mixing an iron-modified molecular sieve, a binder, a dispersant, and an auxiliary agent to obtain a suspension, and shaping the suspension to produce the iron-modified acoustic material,
wherein the content of the iron-modified molecular sieve is not less than 70%, the content of iron is 0.004-1.7%, the dry basis content of the dispersant is 0-1%, and the dry basis content of the auxiliary agent is 0-15%, based on 100% of the total weight of the iron-modified acoustic material.

In the present disclosure, the shaping method is not specifically limited, and the person skilled in the art can reasonably select the shaping method according to the actual operational needs, as long as the objects of the present disclosure can be achieved. For example, when microspheres of the iron-modified acoustic material are to be produced, the shaping method may be spray drying, freeze shaping, oil-column shaping, rolling ball shaping, or the like; and when blocks or flakes of the iron-modified acoustic material are to be produced, the shaping may be carried out by a hot air drying method.

In a still further aspect, the present disclosure further provides a speaker comprising one or more acoustic sensors and one or more housings which together form a rear cavity of the speaker, wherein the rear cavity of the speaker is provided with the iron-modified acoustic material.

In a last aspect, the present disclosure further provides an electronic device provided with the iron-modified acoustic material in a rear cavity of a speaker of the electronic device.

In a specific embodiment of the electronic device of the present disclosure, the electronic device comprises a smartphone, a TWS earphone, a headset, a smart glass, a smart watch, a VR device, an AR device, a tablet PC or a thin and light laptop.

The present disclosure provides an iron-modified acoustic material, prepared by homogeneously mixing an iron-modified molecular sieve, a binder, a dispersant and an auxiliary agent and then shaping the mixture; wherein the content of the iron-modified molecular sieve is not less than 70%, the content of iron is 0.004-1.7%, the dry basis content of the dispersant is 0-1%, and the dry basis content of the auxiliary agent is 0-15%, based on 100% of the total weight of the iron-modified acoustic material.

In a specific embodiment of the iron-modified acoustic material of the present disclosure, wherein the iron-modified molecular sieve is prepared by modifying a molecular sieve with an iron source, and contains silicon, aluminum and iron elements in the framework thereof; and wherein the content of iron is 0.005-2%, based on 100% of the total weight of the iron-modified molecular sieve.

In a specific embodiment of the iron-modified acoustic material of the present disclosure, wherein the iron-modified molecular sieve is produced by a method comprising:

1) mixing the molecular sieve with water, warming up the resultant mixture solution to 70-90°C and mixing the mixture solution homogeneously;
2) adding an iron source to the mixture solution obtained in step 1) and reacting at a temperature of 70-90°C for 4-6 h;
3) upon completion of the reaction, subjecting the solution obtained in step 2) to a solid-liquid separation, continuously washing the separated solid until the conductivity of washing water is < 300 $\mu$S/cm, drying the resultant solid at a temperature of 100-200°C, and then roasting at a temperature of 350-650°C for 2-6 h, to obtain the iron-modified molecular sieve.

In a specific embodiment of the iron-modified acoustic material of the present disclosure, wherein in the molecular sieve, the molar ratio of silica to alumina is 50-5000.

In a specific embodiment of the iron-modified acoustic material of the present disclosure, wherein the iron source comprises one or more of ferric chloride, ferric sulfate, ferrous sulfate, and ferric acetate, and is used in an amount of 0.05-0.25 by weight of the molecular sieve.

In a specific embodiment of the iron-modified acoustic material of the present disclosure, wherein the content of the binder is 1-15% measured as the content of the solid component in the binder, based on 100% of the total weight of the iron-modified acoustic reinforcing material.

In a specific embodiment of the iron-modified acoustic material of the present disclosure, wherein the binder comprises an inorganic binder and/or an organic binder;
wherein the inorganic binder comprises one or more of silica sol, alumina sol, water glass, pseudo-boehmite, and the like; and the organic binder comprises one or more of acrylate-based, epoxy-based, polyurethane-based organic binders, and the like.

In a specific embodiment of the iron-modified acoustic material of the present disclosure, wherein the dispersant comprises one or more of glycerin, HPMA, liquid paraffin, and the like.

In a specific embodiment of the iron-modified acoustic material of the present disclosure, wherein the auxiliary agent comprises one or more of kaolin, diatomite, silica fume, bentonite, smectite, and the like.

In a specific embodiment of the iron-modified acoustic material of the present disclosure, wherein the iron-modified acoustic material is in the shape of microspheres (particles) having a size of 50-400 $\mu$m, blocks or flakes.

The present disclosure further provides a method for producing the iron-modified acoustic material, comprising:

homogeneously mixing an iron-modified molecular sieve, a binder, a dispersant, and an auxiliary agent to obtain a suspension, and shaping the suspension to produce the iron-modified acoustic material,
wherein the content of the iron-modified molecular sieve is not less than 70%, the content of iron is 0.004-1.7%, the dry basis content of the dispersant is 0-1%, and the dry basis content of the auxiliary agent is 0-15%, based on 100% of the total weight of the iron-modified acoustic material.

The present disclosure further provides a speaker comprising one or more acoustic sensors and one or more housings which together form a rear cavity of the speaker, wherein the rear cavity of the speaker is provided with the iron-modified acoustic material.

The present disclosure further provides an electronic device provided with the iron-modified acoustic material in a rear cavity of a speaker of the electronic device.

In a specific embodiment of the electronic device of the present disclosure, wherein the electronic device comprises a smartphone, a TWS earphone, a headset, a smart glass, a smart watch, a VR device, an AR device, a tablet PC or a thin and light laptop.

In the present disclosure, the molecular sieve is modified with the iron source to produce the iron-modified molecular sieve, and the iron-modified acoustic material is produced from the iron-modified molecular sieves as a raw material, and provided in the rear cavity of the speaker, which can substantially improve its stability and reliability in terms of acoustic performance. The stability and reliability of the molecular sieve acoustic materials with silica-alumina ratio in any range can be improved after iron modification. Especially for the molecular sieve acoustic materials with low silica-alumina ratio (e.g., silica-alumina ratio ≤400), the stability and reliability in acoustic performance can be improved more significantly.

Detailed Description of Preferred Embodiments

A "range", as disclosed in the present disclosure, is given in the form of a lower limit and an upper limit. There may be one or more lower limits, and one or more upper limits, respectively. A given range is defined by selecting a lower limit and an upper limit, and the selected lower and upper limits define the boundaries of a particular range. All ranges limited in this manner are combinable, i.e., any lower limit can be combined with any upper limit to form a range. For example, if the ranges 60-120 and 80-110 are listed for a specific parameter, this is understood to mean that the ranges 60-110 and 80-120 are also expectable. In addition, for a range, if the minimum values listed are 1 and 2 and the maximum values listed are 3, 4 and 5, all the following ranges can be expected: 1-3, 1-4, 1-5, 2-3, 2-4 and 2-5.

In the present disclosure, the numerical range "a-b" indicates an abbreviated representation of any combination of real numbers between a and b, where both a and b are real numbers, unless specified otherwise. For example, the numerical range "0-5" indicates that all real numbers between "0-5" are already listed in the present disclosure, and "0-5" is only an abbreviated representation of these combinations of values.

The term "two" as used in this specification means "at least two", unless specified otherwise.

In the present disclosure, all embodiments as well as preferred embodiments mentioned in the present disclosure can be combined with each other to form new technical solutions, unless specified otherwise.

In the present disclosure, all technical features as well as preferred features mentioned in the present disclosure can be combined with each other to form new technical solutions, unless specified otherwise.

In the present disclosure, all the steps mentioned herein may be performed sequentially or randomly, but preferably sequentially, unless specified otherwise. For example, the method including steps (a) and (b) indicates that the method may include steps (a) and (b) performed sequentially, or may include steps (b) and (a) performed sequentially. For example, when reference to the method may further include step (c), it means that step (c) may be added to the method in any order, for example, the method may include steps (a), (b) and (c), or may include steps (a), (c) and (b), or may include steps (c), (a) and (b), etc.

In the present disclosure, the "comprise" mentioned herein may be either open-ended, or closed-ended, unless specified otherwise. For example, the "comprise" may indicate that other components not listed may also be included, or only listed components may be included.

In order to make the objects, technical solutions and advantages of the present disclosure more clearly understood, the present disclosure is described in further detail below in conjunction with the tables and examples. The examples described below are a part of the examples of the present disclosure, and not all of them. They are used only to illustrate the present disclosure and should not be regarded as limiting the scopes of the present disclosure. Based on the examples in the present disclosure, all other examples obtained by a person of ordinary skill in the art without inventive work fall within the protections scopes of the present disclosure. The examples, in which no specific conditions are indicated, are performed according to conventional conditions or conditions recommended by the manufacturer. The reagents or apparatus used, for which the manufacturers are not indicated, are conventional products that can be obtained by commercially available purchase or by methods known in the art. For example, both the ZSM-5 molecular sieve and ZSM-35 molecular sieve described in the present disclosure are molecular sieve materials known in the art and can be purchased directly from the market or synthesized according to literature methods. For example, the molecular sieve described in the present disclosure is a molecular sieve material known in the art and can be purchased directly from the market or synthesized according to literature methods, for example, ZSM-5 molecular sieves, SAPO-34 molecular sieves, Y-type molecular sieves, 3A molecular sieves, or the like.

The silica sol used in Comparative Examples, Application Examples or Comparative Application Examples of the present disclosure is a commercial product purchased from Shandong Peak-tech New Material Co., Ltd, Model HP3010, with a silica content of 30 % by weight.

The alumina sol used in Application Examples or Comparative Application Examples of the present disclosure is a commercial product purchased from Hunan Xinpeng Petrochemical Co., Ltd, , with a alumina content of 20 % by weight.

The epoxy binder used in Application Examples or Comparative Application Examples of the present disclosure is a commercial product purchased from Hunan Linte Technology Co., Ltd, Model LINTEC EP-602PRO, with a viscosity of 4000-6000 cps.

The water-based acrylate binder used in the Application Examples or Comparative Application Examples of the present disclosure is a commercial product purchased from Guangzhou Guanzhi New Material Technology Co., Ltd, Model PA-4867, with a viscosity of <2000 mPa·s.

The water glass used in Application Examples or Comparative Application Examples of the present disclosure is purchased from Dongtai Yongtai Chemical Co., Ltd, with a molar ratio ($SiO_2/Na_2O$) of 1.5.

The kaolin used in Application Examples or Comparative Application Examples of the present disclosure is a commercial product purchased from China Kaolin Clay Co., Ltd, Model Hand 2# powder, with a solid content of 85%.

The diatomite used in Application Examples or Comparative Application Examples of the present disclosure is T-type diatomite manufactured by Qingdao Shengtai Silicon Industry Co., Ltd, with a solid content of 85%.

The bentonite used in Application Examples or Comparative Application Examples of the present disclosure is a commercial product purchased from Aladdin Reagent (Shanghai) Co., Ltd, Model Bentone SD-1.

The silica fume used in Application Examples or Comparative Application Examples of the present disclosure is a commercial product purchased from Aladdin Reagent (Shanghai) Co., Ltd, with a purity of >99% and a particle size of 1 $\mu$m.

Molecular sieve Comparative Examples

Comparative Example 1

This Comparative Example provides a molecular sieve, which was prepared by a production method comprising the following specific steps:

653.33 g of silica sol, 98.00 g of tetrapropylammonium bromide, 172.48 g of ethylamine, 666.38 g of deionized water, 38.0 g of aluminum sulfate and 20.7 g of caustic soda were weighed and added sequentially to a 2 L crystallization kettle, warmed up to 60°C at 2°C/min under a stirring speed of 400 rpm, and reacted at 60°C for 24 h. It was then warmed up to 160°C at 2°C/min and reacted under this condition for 48 h.

Upon completion of the reaction, when the temperature of the crystallization kettle was reduced to below 50°C, the slurry of the crystallization kettle was removed and the solid was separated by centrifugation. The solid was washed with continuous deionized water until the conductivity of the washing water was < 100 $\mu$S/cm, at which point the washing was stopped.

The washed solid was put into an oven for drying overnight and roasted at 550°C for 4 h. The sample obtained was labeled as Comparative Sample 1, where the molar ratio of silica to alumina in the feed was 57.

Comparative Example 2

The molecular sieve provided in this Comparative Example was prepared by the same preparation method as that of Comparative Example 1, except that the aluminum sulfate fed in this Comparative Example was adjusted to 19.0 g, and the sample obtained was labeled as Comparative Sample 2, where the molar ratio of silica to alumina in the feed was 114.

Comparative Example 3

The molecular sieve provided in this Comparative Example was prepared by the same preparation method as that of Comparative Example 1, except that the aluminum sulfate fed in this Comparative Example was adjusted to 9.80 g, and the sample obtained was labeled as Comparative Sample 3, where the molar ratio of silica to alumina in the feed was 222.

Comparative Example 4

The molecular sieve provided in this Comparative Example was prepared by the same preparation method as that of Comparative Example 1, except that the aluminum sulfate fed in this Comparative Example was adjusted to 4.57 g, and the sample obtained was labeled as Comparative Sample 4, where the molar ratio of silica to alumina in the feed was 476.

Comparative Example 5

The molecular sieve provided in this Comparative Example was prepared by the same preparation method as that of Comparative Example 1, except that the aluminum sulfate fed in this Comparative Example was adjusted to 2.61 g, and the sample obtained was labeled as Comparative Sample 5, where the molar ratio of silica to alumina in the feed was 833.

Comparative Example 6

The molecular sieve provided in this Comparative Example was prepared by the same preparation method as that of Comparative Example 1, except that the aluminum sulfate fed in this Comparative Example was adjusted to 0.65 g, and the sample obtained was labeled as Comparative Sample 6, where the molar ratio of silica to alumina in the feed was 3333.

Comparative Example 7

The molecular sieve provided in this Comparative Example was prepared by the same preparation method as that of Comparative Example 1, except that the aluminum sulfate fed in this Comparative Example was adjusted to 0.33 g, and the sample obtained was labeled as Comparative Sample 7, where the molar ratio of silica to alumina in the feed was 6666.

Comparative Example 8

This Comparative Example provided an iron-modified molecular sieve, which was prepared by a production method comprising the following specific steps:

1) 2000 g of deionized water was weighed and added to a 3 L plastic beaker, and then 200 g of Comparative Sample 1 was added to the plastic beaker. It was warmed up to 80°C under stirring, such as stirring for 30 min.
2) After the temperature of the mixture solution obtained in step 1) was warmed up to 90°C, 60 g of ferric acetate was weighed and added to the mixture solution, and allowed to react under stirring for 4 h.
3) After 4 h, the solid and liquid were separated from the slurry by centrifugation, and the solid was washed continuously using deionized water until the conductivity of the washing water was < 300 $\mu$S/cm. When the washing was stopped, the filter cake was removed and dried at 200°C and roasted at 650°C for 2 h. The roasted sample was the iron-modified molecular sieve, labeled as Comparative Sample 8.

Test 1

In this test, elemental analysis measurements were performed on Comparative Samples 1-8, and the elemental contents of Si, Al, Fe and the like in these samples were characterized using an inductively coupled plasma analyzer (ICP, Perkin-Elmer 3300 DV). The measurement results obtained are shown in Table 1 below:

Table 1

| Sample name | Molar ratio of silica to alumina | Mass content of element Fe, % |
|---|---|---|
| Comparative Sample 1 | 52 | 0.001 |
| Comparative Sample 2 | 106 | 0.002 |
| Comparative Sample 3 | 203 | 0.001 |
| Comparative Sample 4 | 398 | 0.003 |
| Comparative Sample 5 | 785 | 0.001 |
| Comparative Sample 6 | 2891 | 0.002 |
| Comparative Sample 7 | 4895 | 0.001 |
| Comparative Sample 8 | 52 | 2.101 |

Examples of iron-modified molecular sieves

Example 1

This example provided an iron-modified molecular sieve, which was prepared by a production method comprising the following specific steps:

1) 2000 g of deionized water was weighed and added to a 3 L plastic beaker, and then 200 g of Comparative Sample 1 was added to the plastic beaker. It was warmed up to 80°C under stirring, such as stirring for 30 min.
2) After the temperature of the mixture solution obtained in step 1) was warmed up to 90°C, 20 g of ferric acetate was weighed and added to the mixture solution, and allowed to react under stirring for 4 h.
3) After 4 h, the solid and liquid were separated from the slurry by centrifugation, and the solid was washed continuously using deionized water until the conductivity of the washing water was < 300 $\mu$S/cm. When the washing was stopped, the filter cake was removed and dried at 200°C and roasted at 650°C for 2 h. The roasted sample was the iron-modified molecular sieve, labeled as Sample 1.

Example 2

This example provided an iron-modified molecular sieve, which was prepared by a production method comprising the following specific steps:

1) 2000 g of deionized water was weighed and added to a 3 L plastic beaker, and then 200 g of Comparative Sample 2 was added to the plastic beaker. It was warmed up to 80°C under stirring, such as stirring for 30 min.
2) After the temperature of the mixture solution obtained in step 1) was warmed up to 90°C, 20 g of ferric acetate was weighed and added to the mixture solution, and allowed to react under stirring for 4 h.
3) After 4 h, the solid and liquid were separated from the slurry by centrifugation, and the solid was washed continuously using deionized water until the conductivity of the washing water was < 300 $\mu$S/cm. When the washing was stopped, the filter cake was removed and dried at 200°C and roasted at 650°C for 2 h. The roasted sample was the iron-modified molecular sieve, labeled as Sample 2.

Example 3

This example provided an iron-modified molecular sieve, which was prepared by a production method comprising the following specific steps:

1) 2000 g of deionized water was weighed and added to a 3 L plastic beaker, and then 200 g of Comparative Sample 3 was added to the plastic beaker. It was warmed up to 70°C under stirring, such as stirring for 30 min.
2) After the temperature of the mixture solution obtained in step 1) was warmed up to 70°C, 40 g of ferric chloride was weighed and added to the mixture solution, and allowed to react under stirring for 4 h.
3) After 4 h, the solid and liquid were separated from the slurry by centrifugation, and the solid was washed continuously using deionized water until the conductivity of the washing water was < 300 $\mu$S/cm. When the washing was stopped, the filter cake was removed and dried at 100°C and roasted at 350°C for 6 h. The roasted sample was the iron-modified molecular sieve, labeled as Sample 3.

Example 4

This example provided an iron-modified molecular sieve, which was prepared by a production method comprising the following specific steps:

1) 2000 g of deionized water was weighed and added to a 3 L plastic beaker, and then 200 g of Comparative Sample 4 was added to the plastic beaker. It was warmed up to 90°C under stirring, such as stirring for 30 min.
2) After the temperature of the mixture solution obtained in step 1) was warmed up to 90°C, 20 g of ferric sulfate was weighed and added to the mixture solution, and allowed to react under stirring for 4 h.
3) After 4 h, the solid and liquid were separated from the slurry by centrifugation, and the solid was washed continuously using deionized water until the conductivity of the washing water was < 300 $\mu$S/cm. When the washing was stopped, the filter cake was removed and dried at 200°C and roasted at 650°C for 2 h. The roasted sample was the iron-modified molecular sieve, labeled as Sample 4.

Example 5

This example provided an iron-modified molecular sieve, which was prepared by a production method comprising the following specific steps:

1) 2000 g of deionized water was weighed and added to a 3 L plastic beaker, and then 200 g of Comparative Sample 5 was added to the plastic beaker. It was warmed up to 90°C under stirring, such as stirring for 30 min.
2) After the temperature of the mixture solution obtained in step 1) was warmed up to 90°C, 20 g of ferrous sulfate was weighed and added to the mixture solution, and allowed to react under stirring for 4 h.
3) After 4 h, the solid and liquid were separated from the slurry by centrifugation, and the solid was washed continuously using deionized water until the conductivity of the washing water was < 300 $\mu$S/cm. When the washing was stopped, the filter cake was removed and dried at 150°C and roasted at 550°C for 4 h. The roasted sample was the iron-modified molecular sieve, labeled as Sample 5.

Example 6

This example provided an iron-modified molecular sieve, which was prepared by a production method comprising the following specific steps:

1) 2000 g of deionized water was weighed and added to a 3 L plastic beaker, and then 200 g of Comparative Sample 6 was added to the plastic beaker. It was warmed up to 80°C under stirring, such as stirring for 30 min.
2) After the temperature of the mixture solution obtained in step 1) was warmed up to 80°C, 10 g of ferric acetate was weighed and added to the mixture solution, and allowed to react under stirring for 4 h.
3) After 4 h, the solid and liquid were separated from the slurry by centrifugation, and the solid was washed continuously using deionized water until the conductivity of the washing water was < 300 $\mu$S/cm. When the washing was stopped, the filter cake was removed and dried at 150°C and roasted at 550°C for 4 h. The roasted sample was the iron-modified molecular sieve, labeled as Sample 6.

Example 7

This example provided an iron-modified molecular sieve, which was prepared by a production method comprising the following specific steps:

1) 2000 g of deionized water was weighed and added to a 3 L plastic beaker, and then 200 g of Comparative Sample 7 was added to the plastic beaker. It was warmed up to 80°C under stirring, such as stirring for 30 min.
2) After the temperature of the mixture solution obtained in step 1) was warmed up to 80°C, 5 g of ferric acetate and 10 g of ferrous sulfate were weighed and added to the mixture solution, and allowed to react under stirring for 4 h.
3) After 4 h, the solid and liquid were separated from the slurry by centrifugation, and the solid was washed continuously using deionized water until the conductivity of the washing water was < 300 $\mu$S/cm. When the washing was stopped, the filter cake was removed and dried at 150°C and roasted at 550°C for 4 h. The roasted sample was the iron-modified molecular sieve, labeled as Sample 7.

Example 8

This example provided an iron-modified molecular sieve, which was prepared by a production method comprising the following specific steps:

1) 2000 g of deionized water was weighed and added to a 3 L plastic beaker, and then 200 g of Comparative Sample 1 was added to the plastic beaker. It was warmed up to 80°C under stirring, such as stirring for 30 min.
2) After the temperature of the mixture solution obtained in step 1) was warmed up to 90°C, 50 g of ferric acetate was weighed and added to the mixture solution, and allowed to react under stirring for 4 h.
3) After 4 h, the solid and liquid were separated from the slurry by centrifugation, and the solid was washed continuously using deionized water until the conductivity of the washing water was < 300 $\mu$S/cm. When the washing was stopped, the filter cake was removed and dried at 200°C and roasted at 650°C for 2 h. The roasted sample was the iron-modified molecular sieve, labeled as Sample 8.

Test 2

In this test, elemental analysis measurements were performed on the Samples 1-8, and the elemental contents of Si, Al, Fe and the like in these samples were characterized using an inductively coupled plasma analyzer (ICP, Perkin-Elmer 3300 DV). The measurement results obtained are shown in Table 2 below:

Table 2

| Sample name | Molar ratio of silica to alumina | Mass content of element Fe, % |
|---|---|---|
| Sample 1 | 54 | 0.050 |
| Sample 2 | 102 | 0.041 |
| Sample 3 | 208 | 0.048 |
| Sample 4 | 401 | 0.038 |
| Sample 5 | 772 | 0.025 |
| Sample 6 | 2812 | 0.008 |
| Sample 7 | 4913 | 0.005 |
| Sample 8 | 52 | 2.000 |

From Table 2 above, it can be seen that all of the molecular sieves prepared in Examples 1-8 of the present disclosure contain iron. That is, the iron-modified molecular sieves are successfully produced in these examples.

Application Examples of iron-modified acoustic materials

Application Example 1

This Application Example provided an iron-modified acoustic material, which was prepared by a production method comprising the following specific steps:
100 g of Sample 1, 44 g of a water-based acrylate binder with a dry basis content of 40%, 1 g of glycerin and 100 g of water were weighed and mixed, stirred thoroughly for 1 h, and shaped by a spray drying process, to obtain a microsphere sample having a median diameter D50 of 372 $\mu$m, labeled as Application Sample 1. Based on 100% of the total weight of Application Sample 1, the mass content of the molecular sieve, that is, Sample 1, was 84.32%, the mass content of the binder was 14.84%, the mass content of the dispersant was 0.84%, and the mass content of the auxiliary agent was 0%.

Application Example 2

This Application Example provided an iron-modified acoustic material, which was prepared by a production method comprising the following specific steps:
100 g of Sample 2, 44 g of a water-based acrylate binder with a dry basis content of 40%, 1 g of glycerin and 100 g of water were weighed and mixed, stirred thoroughly for 1 h, and shaped by a spray drying process, to obtain a microsphere sample having a median diameter D50 of 356 $\mu$m, labeled as Application Sample 2. Based on 100% of the total weight of Application Sample 2, the mass content of the molecular sieve, that is, Sample 2, was 84.32%, the mass content of the binder was 14.84%, the mass content of the dispersant was 0.84%, and the mass content of the auxiliary agent was 0%.

Application Example 3

This Application Example provided an iron-modified acoustic material, which was prepared by a production method comprising the following specific steps:
100 g of Sample 3, 44 g of a water-based acrylate binder with a dry basis content of 40%, 1 g of glycerin and 100 g of water were weighed and mixed, stirred thoroughly for 1 h, and shaped by a spray drying process, to obtain a microsphere sample having a median diameter D50 of 365 $\mu$m, labeled as Application Sample 3. Based on 100% of the total weight of Application Sample 3, the mass content of the molecular sieve, that is, Sample 3, was 84.32%, the mass content of the binder was 14.84%, the mass content of the dispersant was 0.84%, and the mass content of the auxiliary agent was 0%.

Application Example 4

This Application Example provided an iron-modified acoustic material, which was prepared by a production method comprising the following specific steps:
100 g of Sample 4, 70 g of silica sol with a dry basis content of 30%, 24 g of diatomite and 100 g of water were weighed and mixed, stirred thoroughly for 1 h, and shaped by a spray drying process, to obtain a microsphere sample having a median diameter D50 of 52 $\mu$m, labeled as Application Sample 4. Based on 100% of the total weight of Application Sample 4, the mass content of the molecular sieve, that is, Sample 4, was 70.72%, the mass content of the binder was 14.85%, the mass content of the dispersant was 0%, and the mass content of the auxiliary agent was 14.43%.

Application Example 5

This Application Example provided an iron-modified acoustic material, which was prepared by a production method comprising the following specific steps:
100 g of Sample 5, 10 g of alumina sol with a dry basis content of 20%, 1 g of liquid paraffin, 2 g of silica fume and 100 g of water were weighed and mixed, stirred thoroughly for 1 h, and shaped by a spray drying process, to obtain a microsphere sample having a median diameter D50 of 145 $\mu$m, labeled as Application Sample 5. Based on 100% of the total weight of Application Sample 5, the mass content of the molecular sieve, that is, Sample 5, was 95.51%, the mass content of the binder was 1.91%, the mass content of the dispersant was 0.96%, and the mass content of the auxiliary agent was 1.62%.

Application Example 6

This Application Example provided an iron-modified acoustic material, which was prepared by a production method comprising the following specific steps:
100 g of Sample 6, 25 g of water glass with a dry basis content of 25%, 1 g of liquid paraffin, 5 g of bentonite and 100 g of water were weighed and mixed, stirred thoroughly for 1 h, and shaped by a spray drying process, to obtain a microsphere sample having a median diameter D50 of 213 $\mu$m, labeled as Application Sample 6. Based on 100% of the total weight of Application Sample 6, the mass content of the molecular sieve, that is, Sample 6, was 89.69%, the mass content of the binder was 5.60%, the mass content of the dispersant was 0.90%, and the mass content of the auxiliary agent was 3.81%.

Application Example 7

This Application Example provided an iron-modified acoustic material, which was prepared by a production method comprising the following specific steps:
100 g of Sample 7, 10 g of epoxy binder, 0.5 g of glycerin, 5 g of kaolin and 100 g of water were weighed and mixed, stirred thoroughly for 1 h, and shaped by a spray drying process, to obtain a microsphere sample having a median diameter D50 of 288 $\mu$m, labeled as Application Sample 7. Based on 100% of the total weight of Application Sample 7, the mass content of the molecular sieve, that is, Sample 7, was 87.15%, the mass content of the binder was 8.71%, the mass content of the dispersant was 0.44%, and the mass content of the auxiliary agent was 3.70%.

Application Example 8

This Application Example provided an iron-modified acoustic material, which was prepared by a production method comprising the following specific steps:
100 g of Sample 8, 44 g of a water-based acrylate binder with a dry basis content of 40%, 1 g of glycerin and 100 g of water were weighed and mixed, stirred thoroughly for 1 h, and shaped by a spray drying process, to obtain a microsphere sample having a median diameter D50 of 372 $\mu$m, labeled as Application Sample 8. Based on 100% of the total weight of Application Sample 8, the mass content of the molecular sieve, that is, Sample 8, was 84.32%, the mass content of the binder was 14.84%, the mass content of the dispersant was 0.84%, and the mass content of the auxiliary agent was 0%.

Comparative Application Examples of acoustic materials

Comparative Application Example 1

This Comparative Application Example provided an acoustic material, which was prepared by a production method comprising the following specific steps:

100 g of Comparative Sample 1, 44 g of a water-based acrylate binder with a dry basis content of 40%, 1 g of glycerin and 100 g of water were weighed and mixed, stirred thoroughly for 1 h, and shaped by a spray drying process, to obtain a microsphere sample having a median diameter D50 of 368 μm, labeled as Comparative Application Sample 1. Based on 100% of the total weight of Comparative Application Sample 1, the mass content of the molecular sieve, that is, Comparative Sample 1, was 84.32%, the mass content of the binder was 14.84%, the mass content of the dispersant was 0.84%, and the mass content of the auxiliary agent was 0%.

Comparative Application Example 2

This Comparative Application Example provided an acoustic material, which was prepared by a production method comprising the following specific steps:
100 g of Comparative Sample 2, 44 g of a water-based acrylate binder with a dry basis content of 40%, 1 g of glycerin and 100 g of water were weighed and mixed, stirred thoroughly for 1 h, and shaped by a spray drying process, to obtain a microsphere sample having a median diameter D50 of 375 μm, labeled as Comparative Application Sample 2. Based on 100% of the total weight of Comparative Application Sample 2, the mass content of the molecular sieve, that is, Comparative Sample 2, was 84.32%, the mass content of the binder was 14.84%, the mass content of the dispersant was 0.84%, and the mass content of the auxiliary agent was 0%.

Comparative Application Example 3

This Comparative Application Example provided an acoustic material, which was prepared by a production method comprising the following specific steps:
100 g of Comparative Sample 3, 44 g of a water-based acrylate binder with a dry basis content of 40%, 1 g of glycerin and 100 g of water were weighed and mixed, stirred thoroughly for 1 h, and shaped by a spray drying process, to obtain a microsphere sample having a median diameter D50 of 361 μm, labeled as Comparative Application Sample 3. Based on 100% of the total weight of Comparative Application Sample 3, the mass content of the molecular sieve, that is, Comparative Sample 3, was 84.32%, the mass content of the binder was 14.84%, the mass content of the dispersant was 0.84%, and the mass content of the auxiliary agent was 0%.

Comparative Application Example 4

This Comparative Application Example provided an acoustic material, which was prepared by a production method comprising the following specific steps:
100 g of Comparative Sample 4, 70 g of a silica sol with a dry basis content of 30%, 24 g of diatomite and 100 g of water were weighed and mixed, stirred thoroughly for 1 h, and shaped by a spray drying process, to obtain a microsphere sample having a median diameter D50 of 58 μm, labeled as Comparative Application Sample 4. Based on 100% of the total weight of Comparative Application Sample 4, the mass content of the molecular sieve, that is, Comparative Sample 4, was 70.72%, the mass content of the binder was 14.85%, the mass content of the dispersant was 0%, and the mass content of the auxiliary agent was 14.43%.

Comparative Application Example 5

This Comparative Application Example provided an acoustic material, which was prepared by a production method comprising the following specific steps:
100 g of Comparative Sample 5, 10 g of an alumina sol with a dry basis content of 20%, 1 g of liquid paraffin, 2 g of silica fume and 100 g of water were weighed and mixed, stirred thoroughly for 1 h, and shaped by a spray drying process, to obtain a microsphere sample having a median diameter D50 of 153 μm, labeled as Comparative Application Sample 5. Based on 100% of the total weight of Comparative Application Sample 5, the mass content of the molecular sieve, that is, Comparative Sample 5, was 95.51%, the mass content of the binder was 1.91%, the mass content of the dispersant was 0.96%, and the mass content of the auxiliary agent was 1.62%.

Comparative Application Example 6

This Comparative Application Example provided an acoustic material, which was prepared by a production method comprising the following specific steps:
100 g of Comparative Sample 6, 25 g of water glass with a dry basis content of 25%, 5 g of bentonite and 100 g of water were weighed and mixed, stirred thoroughly for 1 h, and shaped by a spray drying process, to obtain a microsphere sample having a median diameter D50 of 221 μm, labeled as Comparative Application Sample 6. Based on 100% of the total weight of Comparative Application Sample 6, the mass content of the molecular sieve, that is, Comparative Sample 6, was 89.69%, the mass content of the binder was 5.60%, the mass content of the dispersant was 0.90%, and the mass content of the auxiliary agent was 3.81%.

Comparative Application Example 7

This Comparative Application Example provided an acoustic material, which was prepared by a production method comprising the following specific steps:
100 g of Comparative Sample 7, 10 g of an epoxy binder, 0.5 g of glycerin, 5 g of kaolin and 100 g of water were weighed and mixed, stirred thoroughly for 1 h, and shaped by a spray drying process, to obtain a microsphere sample having a median diameter D50 of 297 $\mu$m, labeled as Comparative Application Sample 7. Based on 100% of the total weight of Comparative Application Sample 7, the mass content of the molecular sieve, that is, Comparative Sample 7, was 87.15%, the mass content of the binder was 8.71%, the mass content of the dispersant was 0.44%, and the mass content of the auxiliary agent was 3.70%.

Comparative Application Example 8

This Comparative Application Example provided an acoustic material, which was prepared by a production method comprising the following specific steps:
100 g of Comparative Sample 8, 44 g of a water-based acrylate binder with a dry basis content of 40%, 1 g of glycerin and 100 g of water were weighed and mixed, stirred thoroughly for 1 h, and shaped by a spray drying process, to obtain a microsphere sample having a median diameter D50 of 368 $\mu$m, labeled as Comparative Application Sample 8. Based on 100% of the total weight of Comparative Application Sample 8, the mass content of the molecular sieve, that is, Comparative Sample 8, was 84.32%, the mass content of the binder was 14.84%, the mass content of the dispersant was 0.84%, and the mass content of the auxiliary agent was 0%.

Test 3

In this test, each of Application Samples 1-8 and Comparative Application Samples 1-8 was tested for acoustic performance, specifically as follows:
0.14 g of each of Samples and Comparative Samples was taken for acoustic performance test. Herein, the acoustic performance test was performed using conventional methods in the art. For example, the acoustic performance of each of Samples and Comparative Samples can be tested in accordance with the method of "measurement of electrical impedance" shown in paragraphs 0049-0054 of Chinese patent publication CN105049997A. Specifically, each of Sample and Comparative Samples was tested in accordance with the method of "measurement of electrical impedance" to obtain an electrical impedance profile. The curve in the electrical impedance profile corresponds to the electrical impedance curve, where the highest point of the electrical impedance curve corresponds to the frequency $F_0$. $F_0$ measured when the speaker is not loaded with each of Samples and Comparative Samples is marked as $F_{0\text{-cavity}}$, and $F_0$ measured when the speaker is loaded with each of Samples and Comparative Samples is marked as $F_{0\text{-sample or Comparative Sample}}$. $\Delta F_0$ is calculated by the following equation:

$$\Delta F_0 = F_{0\text{-cavity}} - F_{0\text{-sample or Comparative Sample}}$$

In this test example, the testing environment is a speaker module having a target cavity of 0.2 cc, and the high temperature and high humidity refers to an environment with a relative humidity of 85% and a temperature of 85°C. The measurement results obtained are shown in Table 3 below:

Table 3

| Sample name | $\Delta F_0$/Hz | $\Delta F_0$ (high temperature and high humidity)/Hz | $\Delta F_0$ offset (high temperature and high humidity)/Hz |
|---|---|---|---|
| Application Sample 1 | 95 | 91 | -4 |
| Application Sample 2 | 99 | 94 | -5 |
| Application Sample 3 | 99 | 95 | -4 |
| Application Sample 4 | 102 | 98 | -4 |

(continued)

| Sample name | $\Delta F_0$/Hz | $\Delta F_0$ (high temperature and high humidity)/Hz | $\Delta F_0$ offset (high temperature and high humidity)/Hz |
|---|---|---|---|
| Application Sample 5 | 103 | 101 | -2 |
| Application Sample 6 | 105 | 103 | -2 |
| Application Sample 7 | 107 | 105 | -2 |
| Application Sample 8 | 96 | 92 | -4 |
| Comparative Application Sample 1 | 94 | 75 | -19 |
| Comparative Application Sample 2 | 98 | 79 | -19 |
| Comparative Application Sample 3 | 99 | 81 | -17 |
| Comparative Application Sample 4 | 103 | 93 | -10 |
| Comparative Application Sample 5 | 103 | 94 | -9 |
| Comparative Application Sample 6 | 106 | 96 | -10 |
| Comparative Application Sample 7 | 107 | 98 | -9 |
| Comparative Application Sample 8 | 94 | 77 | -17 |

From the test results shown in Table 3 above, it can be seen that the stability and reliability of the iron-modified acoustic materials produced by using the iron-modified molecular sieves as raw materials and shaping them as the acoustic materials for speakers, that is, the iron-modified acoustic materials, has been greatly improved at high temperature and high humidity, as compared with those produced by using unmodified molecular sieves. In particular, for the iron-modified acoustic materials produced from the iron-modified molecular sieves with low silica-alumina ratio (molar ratio of silica to alumina), such as Application Samples 1-3, the stability and reliability in acoustic performance is improved more significantly.

In conclusion, in the Examples of the present disclosure, the molecular sieve is modified with the iron source to produce the iron-modified molecular sieve, and the iron-modified acoustic material is produced from the iron-modified molecular sieves as a raw material, and provided in the rear cavity of the speaker, which can substantially improve its stability and reliability in terms of acoustic performance. The stability and reliability of the molecular sieve acoustic materials with silica-alumina ratio in any range can be improved after iron modification. Especially for the molecular sieve acoustic materials with low silica-alumina ratio (e.g., silica-alumina ratio ≤ 400), the stability and reliability in acoustic performance is improved more significantly.

The above description is only specific examples of the present disclosure and cannot be used to limit the implementable scope of the invention. Therefore, the substitution with equivalent components or equivalent changes and modifications made in accordance with the protection scope of the patent of the present disclosure shall still fall within the scope encompassed by the patent. In addition, arbitrary combinations of technical features and technical features, technical features and technical inventions, and technical inventions and technical inventions of the present disclosure can be used.

## Claims

1. An iron-modified molecular sieve, comprising silica, alumina and iron elements in the framework thereof, and the content of iron is 0.005-2%, based on 100% of the total weight of the iron-modified molecular sieve.

2. A method for producing the iron-modified molecular sieve according to claim 1, comprising:

   step 1) mixing a molecular sieve with water, warming up the resultant mixture solution to 70-90°C and mixing the mixture solution homogeneously;
   step 2) adding an iron source to the mixture solution obtained in step 1) and reacting at a temperature of 70-90°C for 4-6 h;
   step 3) upon completion of the reaction, subjecting the solution obtained in step 2) to a solid-liquid separation, continuously washing the separated solid until the conductivity of washing water is < 300 $\mu$S/cm, drying the resultant solid at a temperature of 100-200°C, and then roasting at a temperature of 350-650°C for 2-6 h, to obtain the iron-modified molecular sieve.

3. The method according to claim 2, wherein in the molecular sieve, the molar ratio of silica to alumina is 50-5000.

4. The method according to claim 2 or 3, wherein the iron source comprises one or more of ferric chloride, ferric sulfate, ferrous sulfate, and ferric acetate, and is used in an amount of 0.05-0.25 by weight of the molecular sieve.

5. The method according to any one of claims 2-4, wherein in step 1), the molecular sieve is mixed with water, which is 10 times the weight of the molecular sieve.

6. An iron-modified acoustic material, comprising the iron-modified molecular sieve according to claim 1, wherein the content of the iron-modified molecular sieve is not less than 70%, based on 100% of the total weight of the iron-modified acoustic material.

7. A speaker comprising one or more acoustic sensors and one or more housings which together form a rear cavity of the speaker, wherein the rear cavity of the speaker is provided with the iron-modified acoustic material according to claim 6.

8. An electronic device provided with the iron-modified acoustic material according to claim 6 in a rear cavity of a speaker of the electronic device.

9. The electronic device according to claim 8, wherein the electronic device comprises a smartphone, a TWS earphone, a headset, a smart glass, a smart watch, a VR device, an AR device, a tablet PC or a thin and light laptop.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 23184454
- CN 202210840193